# EUROPEAN PATENT APPLICATION

(11) **EP 4 793 622 A1**
(43) Date of publication of application: **19.08.2026**
(21) Application number: 25315054.4
(22) Date of filing: 17.02.2025
(51) Int. Cl.: G01N 13/02

(54) **DEVICE AND METHOD FOR IDENTIFYING TRIPLE LINE ENERGY VIA A LIQUID CAPILLARY BRIDGE**

(71) Applicant: Centre National de la Recherche Scientifique, 75016 Paris (FR); La Rochelle Université, 17071 La Rochelle Cedex 9 (FR); Université d'Aix Marseille, 13007 Marseille (FR)
(72) Inventor: Millet, Olivier, 17000 La Rochelle (FR); Medale-Iusti, Marc, 13453 Marseille (FR); Moreau, Antoine, 17000 La Rochelle (FR)
(74) Representative: Hautier IP

(57) **Abstract**

The invention consists of the development of a device for the invention consists of the development of a device for identifying wetting properties of a system comprising a liquid, a fluid and a solid, via a liquid capillary bridge placed between substrates. The device semiautomatically creates capillary bridges at controlled pressure or volume, then takes high-resolution photographs, and then continues with the identification of wetting properties as especially the triple line energy. The proposed original model is based on the equations which derive from the minimization of the energy of the liquid capillary bridge which consists of the interfacial surface energies and the line energy. The added value of the proposed device and method consists in allowing defining experimental protocols which lead to a more precise identification of properties.

## Description

### TECHNICAL FIELD

The disclosure relates broadly to the development of a system and an associated method for identifying wetting properties via a capillary liquid bridge.

The invention finds applications in the field of coating(s), deposit(s) of paint(s), surface treatment(s), glass(es) (particularly for self-cleaning glazing), glue(s), etc.

### BACKGROUND

The partial wetting of a surface by a liquid, immersed in a fluid environment (immiscible liquid or gas), characterizes the propensity of this liquid to spread over this surface. This property is central in the unfolding of numerous industrial processes based on natural processes, such as spreading of raindrops on a surface (particularly on a glazing), etc. and their industrial implementations, such as coatings, adhesion of deposits on substrate, paint, glue, etc.

Furthermore, the characterization or identification of partial wetting properties is somewhat of a canonical problem in physics, because it involves quantities that cannot be measured directly and independently. Indeed, solid-liquid and solid-gas surface energies are generally identified by means of models or constitutive relationships, the inputs of which are usually only combinations of the physical properties sought. In a partial wetting problem, as much as four material properties must ideally be identified: three interfacial free energies (solid-liquid, liquid-fluid and solid-fluid), as well as the energy associated with the solid-liquid-gas zone (three-phase zone), hereinafter referred to as triple line energy, since it can be located at macroscopic scale along the three-phase contact line (or triple line).

Young's equation proposed more than two hundred years ago is probably the most widely used to identify wetting properties. Indeed, it directly links the macroscopic wetting angle to interfacial free energies of the solid-fluid, solid-liquid and liquid-fluid interfaces, respectively denoted *γ_{sg}*, *γₛₗ* and *γ_{lg}*, in: ${γ}_{sg} - {γ}_{sl} = {γ}_{lg} cos θ ,$ where *θ* is the macroscopic contact angle of the liquid on the substrate.

The identification of wetting properties from Young's equation raises some questions related to its domain of validity, because it takes into account neither gravity effects nor those of triple-line energy, whereas these can in certain cases influence the result.

On the one hand, one way to minimize the influence of gravity effects is to do the experiments with small volumes of liquid, but in this case, the line energy can be non-negligible.

On the other hand, if we want to consider configurations where the line energy is negligible compared to the interfacial free energies, it is then appropriate to consider large wetted radius (so, large volumes of liquid), but in this case, the effects of gravity become important and can be non-negligible.

The present disclosure aims at providing a solution for creating capillary bridges in a semi-automatic manner, then for taking of high-resolution photographs, and then for identifying the corresponding wetting properties (solid-liquid and solid-gas interfacial free energies, triple line energy).

### SUMMARY

According to a first aspect of the present invention, disclosed is a device for identifying wetting properties of a system comprising a liquid, a fluid and a solid, via a liquid capillary bridge made of said liquid, the device comprising:
- a first substrate and a second substrate, at least one among the first substrate and the second substrate being non-planar,
- a micro-positioning system configured to adjust a spacing between the first substrate and the second substrate,
- a telecentric light source configured to illuminate the spacing between the first substrate and the second substrate,
- a high-resolution camera configured to be sensibly oriented towards said spacing in an opposite direction relative to an optical axis of said telecentric light, and
- a central processing unit.

A top substrate among the first substrate and the second substrate is configured together with said micro-positioning system for adjusting said spacing, noted D, between the first substrate and the second substrate.

The high-resolution camera is configured for providing, to the central processing unit, at least one image of the liquid capillary bridge formed between the first substrate and the second substrate.

The processing unit is configured to identify, in function of said at least one image and according to a model derived from a minimization of total interfacial free energy of said system, with at least one fixed geometrical parameter relating to the geometry of at least one among the first substrate and the second substrate and with a fixed parameter chosen from among a volume V and a capillary pressure ΔP of the liquid capillary bridge, at least the difference *γ_{sg} - γₛₗ* between the interfacial free energy of the solid-fluid and the interfacial free energy of the solid-liquid from among said wetting properties of the system, with said fluid surrounding the liquid capillary bridge, and to identify the triple line energy *γ_{slg}*.

According to a second aspect, disclosed is a method for identifying wetting properties of a system comprising a liquid, a fluid and a solid via a liquid capillary bridge made of said liquid, the method using a device according to any of the preceding claims and comprising the following steps:
- deposit a volume *V*₀ of liquid between the first substrate and the second substrate of said device maintained at a distance D from each other to form a symmetrical capillary bridge;
- take at least one image of the capillary bridge; and
- deduce, from said at least one image and by using a model derived from a minimization of free energy of a liquid capillary bridge made of said liquid, with at least one fixed geometrical parameter (α, R) relating to the geometry of at least one among the first substrate and the second substrate and with a fixed parameter chosen from among a volume *V* and a capillary pressure Δ***P*** of the liquid capillary bridge, at least the difference *γ_{sg}* - *γₛₗ* between the interfacial free energy of the solid-fluid *γ_{sg}* and the interfacial free energy of the solid-liquid *γₛₗ* from among said wetting properties of the liquid, with said fluid surrounding the liquid capillary bridge, and deduce the triple line energy *γ_{slg}.*

A third aspect of the present disclosure relates to a non-transitory computer readable medium storing instructions, which, when implemented by at least one digital processing device, performs at least the steps of the method according the first aspect of the invention and/or the steps of the method according the second aspect of the invention. In addition or as an alternative, the present disclosure relates to a computer program product comprising instructions which, when implemented by at least one digital processing device, performs or controls at least the steps of the method according the second aspect of the invention, if needed except the deposition step(s).

A fourth aspect of the present disclosure relates to a use of a device according to the first aspect of the invention for implementing the method according to the second aspect of the invention.

Other objects, features and advantages of the invention(s) disclosed herein, and their various embodiments/aspects, may become apparent in light of the description of some exemplary embodiments that follows.

### BRIEF DESCRIPTION OF THE DRAWINGS

Reference will be made in detail to embodiments of the disclosure, non-limiting examples of which may be illustrated in the figures of the accompanying drawings. Some figures may be in the form of diagrams. Some elements in the figures may be exaggerated; others may be omitted, for illustrative clarity.

Any text (legends, notes, reference numerals and the like) appearing on the drawings may be incorporated herein by reference.
Figure 1 is a schematic cartesian representation of an axisymmetric capillary bridge between two conical substrates;
Figure 2 is a schematic cartesian representation of an axisymmetric capillary bridge between two spherical substrates;

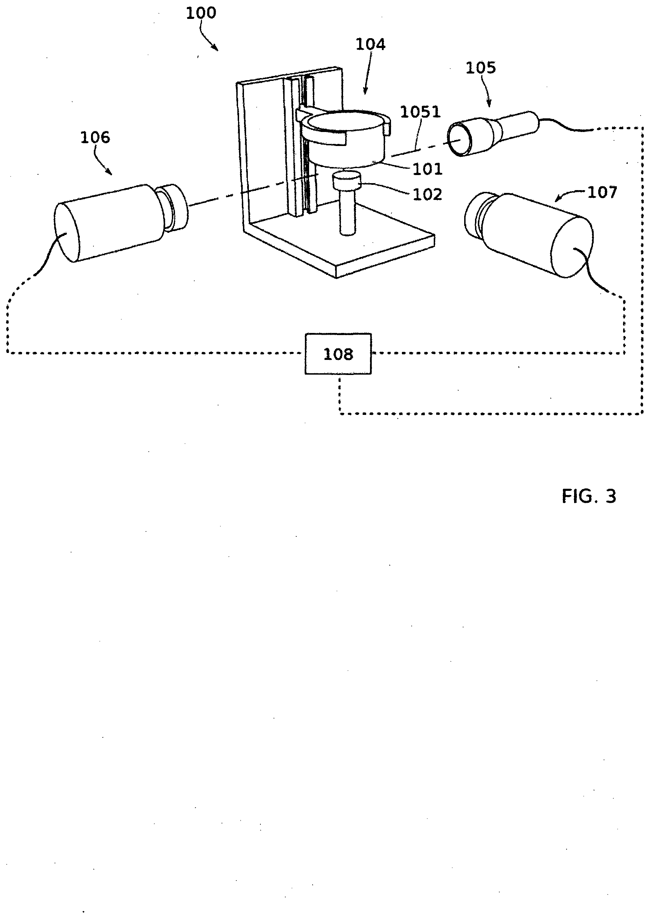

Figure 3 is a schematic representation of an embodiment of the device according to the first aspect of the invention that is used to carry out evaporation and separation experiments on capillary bridges;

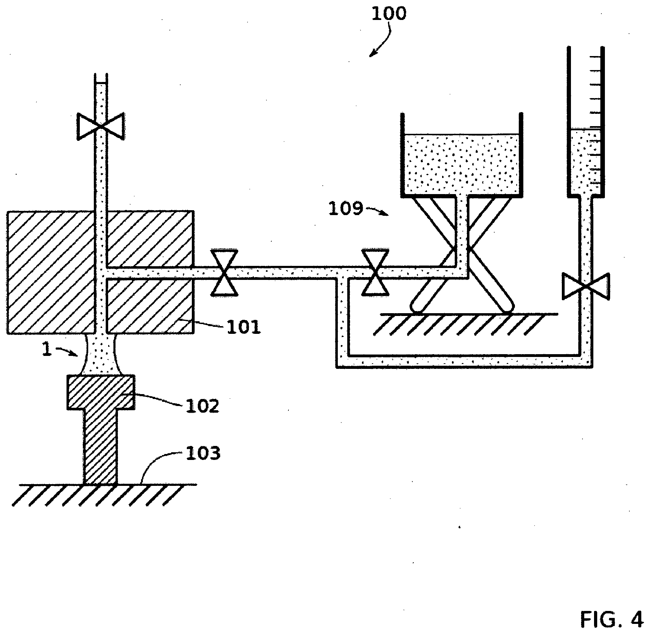

Figure 4 is a schematic representation of an embodiment of the device according to the first aspect of the invention that is used to impose capillary pressure; and
Figure 5 is a flowchart of an embodiment of the method according to the second aspect of the invention.

### DETAILED DESCRIPTION

Before starting a detailed review of embodiments of the invention, the following are optional features which may optionally be used in combination or alternatively:
Preferably, the first substrate and the second substrate are axisymmetric about a same axis.

According to an embodiment, the first substrate and the second substrate are both convex or both concave and wherein said derived model is given by the following equation: ${γ}_{lg} {δA}_{lg} + \left({γ}_{sg 1}-{γ}_{sl 1}\right) {δA}_{sl 1} + \left({γ}_{sg 2}-{γ}_{sl 2}\right) {δA}_{sl 2} \pm {γ}_{slg 1} {δL}_{slg 1} \pm {γ}_{slg 2} {δL}_{slg 2} - Δ PδV = 0$ where *γ_{lg}* is the interfacial free energy of the liquid-fluid interface, *γ*_{*sg*1} is the interfacial free energy of the solid-fluid interface at the first substrate, *γ*_{*sg*2} is the interfacial free energy of the solid-fluid interface at the second substrate, *γ*_{*sl*1} is the interfacial free energy of the solid-liquid interface at the first substrate, *γ*_{*sl*2} is the interfacial free energy of the solid-liquid interface at the second substrate, *γ*_{*slg*1} is the triple line energy at the first substrate, *γ*_{*slg*2} is the triple line energy at the second substrate, *A_{lg}* is the area of the interface between the capillary bridge and the surrounding fluid, *A*_{*sl*1} is the area of the interface between the capillary bridge and the first substrate, *A*_{*sl*2} is the area of the interface between the capillary bridge and the second substrate, *L*_{*slg*1} is the length of contact triple-line at the first substrate, *L*_{*slg*2} is the length of contact triple-line at the second substrate, and u is their resulting relative displacement.

According to an embodiment, the first substrate and the second substrate are spherically curved.

According to an embodiment, the first substrate and the second substrate respectively have a first radius of curvature R₁ and a second radius of curvature R₂, R₁ and R₂ being equal, and wherein said derived model is given by the following equation: $cos \left(θ\right) - \frac{{γ}_{sg} - {γ}_{sl}}{{γ}_{lg}} \pm \frac{{γ}_{slg}}{{γ}_{lg} {y}_{c}} cos \left(ζ\right) = 0$ where *γ_{sg}* is the surface energy of the solid-fluid interface, *γₛₗ* is the interfacial free energy of the solid-liquid interface, *γ_{lg}* is the interfacial free energy of the liquid-fluid interface, *γ_{slg}* is the triple line energy, where *θ* is a macroscopic wetting angle of the capillary bridge at the first substrate and at the second substrate, where *ζ* is an angle locating the triple-line, and where *y_{c}* is a wetting radius of the liquid capillary bridge as measured at the level of the first substrate and/or at the level of the second substrate and relative to a generatrix of the liquid capillary bridge.

According to an embodiment, the first substrate and the second substrate have a conical shape.

According to an embodiment, the first substrate and the second substrate respectively have a first aperture angle α₁ and a second aperture angle α₂, α₁ and α₂ being equal to α, and wherein said derived model is given by the following equation: $cos \left(θ\right) - \frac{{γ}_{sg} - {γ}_{sl}}{{γ}_{lg}} \pm \frac{{γ}_{slg}}{{γ}_{lg} {y}_{c}} sin \left(α\right) = 0$ where *γ_{sg}* is the interfacial free energy of the solid-fluid interface, *γₛₗ* is the interfacial free energy of the solid-liquid interface, *γ_{lg}* is the interfacial free energy of the liquid-fluid interface, *γ_{slg}* is the triple line energy, where *θ* is a macroscopic wetting angle of the capillary bridge at the first substrate and at the second substrate, and where *y_{c}* is a wetting radius of the liquid capillary bridge as measured at the level of the first substrate and/or at the level of the second substrate and relative to a generatrix of the liquid capillary bridge.

Preferably, the distance D between the first substrate and the second substrate is inferior, preferably at least five times inferior, to $4 \frac{{{l}_{c}}^{2}}{r}$, where ${l}_{c} = \sqrt{\frac{{γ}_{lg}}{Δ pg}}$*, γ_{lg}* being the interfacial free energy of the liquid-fluid interface, Δ*ρ* being the difference of densities between the liquid forming the capillary bridge and the surrounding fluid, g being the acceleration due to gravity, and where r is an approximate radius of a cylinder formed by the capillary bridge between the first substrate and the second substrate.

Preferably, the first substrate and the second substrate are each made of one among a metal, a polymer or glass.

Preferably, the distance D between the first substrate and the second substrate is inferior to 6 mm, preferably inferior to 3 mm.

According to an example, the first substrate and the second substrate are made of the same material.

According to another example, the first substrate and the second substrate are made of different materials.

A capillary liquid bridge is a volume of liquid bridging two rigid bodies.

Interfacial free energy is the contribution to the free energy of a system due to the presence of an interface separating two coexisting phases at equilibrium. Surface density of interfacial free energy is usually expressed in J/m².

The total interfacial free energy of a system is the sum of interfacial free energies of all the interfaces present in the system.

In the present application, a shape - and especially a substrate - is said convex when its outer surface follows a convex function, i.e. the line segment between any two distinct points on said outer surface lies above or on the outer surface between said two points.

In the present application, a shape - and especially a substrate - is said concave when its outer surface follows a concave function, i.e. the line segment between any two distinct points on said outer surface lies under the outer surface between said two points.

In the present application, an object - and especially a substrate - is said spherically curved when at least a portion of its outer surface is a spherical cap or an entire sphere or non-planar.

In the present application, an object - and especially a substrate - has a conical shape when at least a portion of its outer surface defines a cone.

In the present application, a substrate is an object made of at least one solid material.

Note that the term 'rigid' depicts a quality of at least one, preferably both, of the two substrates specifying that said substrate(s) is(are) not deformable under the action of the capillary forces observed at the interfaces between said substrate(s) and the liquid.

Unless otherwise specified, in the following the equations are established for a system:
- at static equilibrium, which results in no fluid flow,
- at thermodynamic equilibrium, i.e. there is no phase change, chemical potentials and temperature are constant, and the pressure is uniform.

The terms 'substantially', 'approximately', 'of the order of', 'sensibly" mean to within 10%, preferably to within 5%'.

In order to mitigate the effects of gravity on the identification of wetting properties, it is here proposed to consider liquid capillary bridges between a first substrate 101 and a second substrate 102. Compared to sessile drops approaches, the proposed device and method make it possible, for a same volume of liquid, to almost double the contact surface effects compared to gravity effects, and thus to reduce the relative influence of the latter compared to the interfacial effects.

Thus, one of the originalities of the here proposed device and method for identifying wetting properties is based on a configuration of a liquid capillary bridge between two substrates. It should be noted that the substrates are sufficiently rigid to remain undistorted despite the formation of the capillary bridge. The method for identifying these wetting properties is traditionally based on image processing. However, the proposed device and method take advantage of an original model which makes it possible to identify the solid-liquid and solid-gas surface tensions, as well as the triple-line energy, where the fluid environment is supposed to be a gas without excluding that it can also be a non-miscible fluid.

Another originality of the invention lies in the fact that one of the substrates between which the liquid capillary bridge is set is non-planar. Indeed, in the case of non-planar substrate geometry, we have an additional geometrical parameter, either linked directly to the geometry of the substrate, or linked to the volume of the liquid bridge, to identify surface densities of interfacial free energy and line energy. This additional parameter is an additional variable that can be dimensioned to better identify surface densities of interfacial free energy and line energy.

The equations of the original model come from the minimization of the total energy of the system, i.e., the sum of interfacial free energy of the capillary liquid bridge (consisting of interfacial and line energies) and mechanical work performed by external forces acting on the liquid bridge, in a geometry with symmetry of revolution (the axis of the liquid capillary bridge is aligned with gravity). This approach makes it possible to get not only the Young-Laplace equation, which describes the differential equation of the liquid-fluid interface, but also a generalization of the Young's equation for a liquid capillary bridge between two substrates.

As will become clear from reading the following by reference to the appended figures, the invention thus consists in the development of a device 100 and method 200 for creating capillary bridges with controlled pressure or volume, on which high resolution images are taken, which are then used for identifying wetting properties of the liquid-fluid-solid system formed respectively by the capillary bridge, the surrounding fluid and the substrates by using the above mentioned model. The main contribution of the device 100 and method 200 according to the present invention may be considered as based on the ability to define at least one experimental protocol that leads to better, more particularly to more precise, identification of properties in cases where gravity is negligible.

To achieve the identification of the triple-line energy, at least one among the first substrate 101 and the second substrate 102 featured in the device 100 and the method 200 according to the present invention can be non-planar. The fact that one of the substrates is non-planar causes the introduction in the system's energy of a geometrical parameter related to the geometry of said non-planar substrate. It is then possible to take advantage of this additional, fixed parameter to identify the triple-line energy, as shall appear hereinafter.

In the following, we consider a capillary bridge, denoted *Ωₗ,* set between two solid substrates, denoted *Ωₛ*, that it touches over their interfaces, denoted *ωₛₗ*. Both the liquid bridge and solid substrates are surrounded by an external fluid (a gas or another non-miscible liquid), that they contact over their interfaces, denoted *ω_{lg}* and *ω_{sg}*, respectively. So, one gets: ∂*Ωₗ* = *ω_{lg}* ∪ *ωₛₗ* and ∂*Ωₛ* = *ωₛₗ* ∪ *ω_{sg}*. At thermodynamical equilibrium, i.e., no phase change, constant chemical potentials and temperature, and uniform pressure (negligible gravity effects), the relevant state function of the system is its Grand potential, denoted *E_{Ω}.* For the system considered here it classically depends on surface densities of free energy *γ_{lg}, γₛₗ* and *γ_{sg},* over the system interfaces, *ω_{lg}, ωₛₗ* and *ω_{sg}* and on the associated liquid-fluid, solid-liquid and solid-fluid interface areas *A_{lg}, Aₛₗ* and *A_{sg}.* It reads: ${E}_{Ω} = {γ}_{lg} {A}_{lg} + {γ}_{sl} {A}_{sl} + {γ}_{sg} {A}_{sg} - ΔPV$ *ΔP* = *P_{liquid}* - *P_{gas}* is the capillary pressure (pressure difference between inside and outside of the capillary bridge) and V is the volume of the liquid bridge.

Further assuming rigid solid substrates of constant surface area *(Aₛ = Aₛₗ + A_{sg}*) and constant surface densities of free energy, the shape of the liquid bridge at static equilibrium verifies the minimization of the Grand potential, that reads in the absence of external force: ${γ}_{lg} {δA}_{lg} + \left({γ}_{sl}-{γ}_{sg}\right) {δA}_{sl} - ΔPδV = 0$

The minimization associated with Equation (2) leads to the derivation of the Young-Laplace equation, along with Young's equation as a boundary condition. However, Young's equation models partial wetting problems in cases of perfect solid substrates, i.e., smooth and chemically homogeneous, and predicts a unique equilibrium macroscopic contact angle. However, in actual conditions (rough substrates, possibly containing some amount of chemical heterogeneities), one merely always ends up with an hysteresis of macroscopic contact angle, owing to the way the capillary bridge is actually set up in the experiment (advancing or receding contact line over the solid substrates).

Therefore, in the model used in the present application, to model actual situations where a hysteresis of macroscopic contact angle exists, one supplements the total energy of the system with a contact line energy, as in formerly introduced by Gibbs. However, in the present application, as this line energy term represents an energy dissipation along the contact line, a ± sign was introduced in front of it to distinguish the cases where the contact line is in the limit of advancing on a dry solid substrates (positive sign), from the case where it is in the limit of receding on the substrates (negative sign).

Finally, when the distance between the parallel solid change, the static equilibrium results from the total energy minimization of the system, that reads as follows: ${γ}_{lg} {δA}_{lg} + \left({γ}_{sl}-{γ}_{sg}\right) {δA}_{sl} \pm {γ}_{slg} {δL}_{slg} - ΔPδV = 0$ where *γ_{slg}* is the line density of energy, assumed constant and *L_{slg}* is the length of contact lines .

### Energy of a capillary bridge between two convex substrates

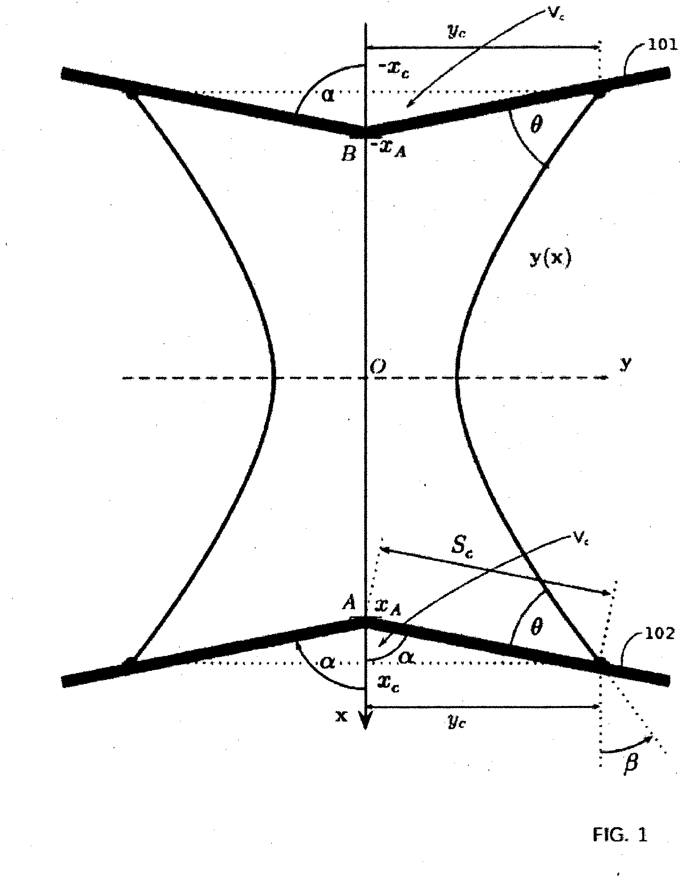

In a preferred embodiment of the present invention, the first substrate 101 and the second substrate 102 are both convex. Also, preferably, the first substrate 101 and the second substrate 102 exhibit a symmetry of revolution around the same axis, the x axis in the figures. The first substrate 101 and the second substrate 102 are not necessarily identical nor symmetrical to each other. The outer surfaces of the first substrate 101 and of the second substrate 102, respectively called upper and lower surfaces, are denoted y₁(x) and y₂(x), respectively, and the meridian profile of the liquid bridge is denoted y(x) (Fig. 1). All these functions are assumed to be singled valued with respect to the axial coordinate x. Thanks to this parameterization, the geometrical quantities involved in the total energy minimizations read as follows:
- Liquid bridge volume: $V = {\int }_{{x}_{{c}_{1}}}^{{x}_{{c}_{2}}} πy {\left(x\right)}^{2} dx - \left({V}_{{s}_{1}}+{V}_{{s}_{2}}\right)$ ${V}_{{s}_{1}} = {\int }_{{x}_{{c}_{1}}}^{{x}_{{s}_{1}}} {πy}_{1} {\left(x\right)}^{2} dx$ ${V}_{{s}_{2}} = {\int }_{{x}_{{s}_{2}}}^{{x}_{{c}_{2}}} {πy}_{2} {\left(x\right)}^{2} dx$ $δ V = {\int }_{{x}_{{c}_{1}}}^{{x}_{{c}_{2}}} 2 πy \left(x\right) δ y \left(x\right) dx + 2 π \left({y}_{2}^{2}\left({x}_{{c}_{2}}\right)δ{x}_{{c}_{2}}-{y}_{1}^{2}\left({x}_{{c}_{1}}\right)δ{x}_{{c}_{1}}\right)$ where V is the liquid bridge volume, *x*_{*c*₁} and *x*_{*c*₂} are the upper and lower abscissa of the contact lines over their respective solid substrates, *V*_{*s*₁} and *V*_{*s*₂} are the parts of upper and lower solid volumes immersed into the capillary bridge. Finally *x*_{*s*₁} and *x*_{*s*₂} are the abscissa of the intersection of the meridians *y*₁(*x*) and *y*₂(*x*) with the abscissa axis, they verify by definition *y*₁(*x*_{*s*₁}) = 0 and *y*₂(*x*_{*s*2}) = 0.
- Liquid-gas area: ${A}_{lg} = {\int }_{{x}_{{c}_{1}}}^{{x}_{{c}_{2}}} 2 πy \left(x\right) \sqrt{1 + y {′}^{2}} dx$ ${δA}_{lg} = 2 {\int }_{{x}_{{c}_{1}}}^{{x}_{{c}_{2}}} \left(\sqrt{1 + y {′}^{2} \left(x\right)}δy\left(x\right)+\frac{y \left(x\right) y ′ \left(x\right)}{\sqrt{1 + y {′}^{2} \left(x\right)}}δy′\left(x\right)\right) dx$
- Solid-liquid areas at upper and lower solid substrates: ${A}_{{sl}_{1}} = {\int }_{{x}_{{c}_{1}}}^{{x}_{{s}_{1}}} 2 {πy}_{1} \left(x\right) \sqrt{1 + {y}_{1} {′}^{2} \left(x\right)} dx$ ${δA}_{{sl}_{1}} = 2 {πy}_{1} \left({x}_{{c}_{1}}\right) \sqrt{1 + {y}_{1} {′}^{2} \left({x}_{{c}_{1}}\right)} {δx}_{{c}_{1}}$ ${A}_{{sl}_{2}} = {\int }_{{x}_{{s}_{2}}}^{{x}_{{c}_{2}}} 2 {πy}_{2} \left(x\right) \sqrt{1 + {y}_{2} {′}^{2} \left(x\right)} dx$ ${δA}_{{sl}_{2}} = 2 {πy}_{2} \left({x}_{{c}_{2}}\right) \sqrt{1 + {y}_{2} {′}^{2} \left({x}_{{c}_{2}}\right)} {δx}_{{c}_{2}}$
- Contact line perimeters at upper and lower solid substrates: ${L}_{{slg}_{1}} = 2 π y \left({x}_{{c}_{1}}\right)$ ${δL}_{{slg}_{1}} = 2 πδ y \left({x}_{{c}_{1}}\right)$ ${L}_{{slg}_{2}} = 2 π y \left({x}_{{c}_{2}}\right)$ ${δL}_{{slg}_{2}} = 2 πδ y \left({x}_{{c}_{2}}\right)$

Gathering all the contributions of variations into the total energy minimisation relationship Equation (3), one gets: ${γ}_{lg} {δA}_{lg} + \left({γ}_{sg 1}-{γ}_{sl 1}\right) {δA}_{sl 1} + \left({γ}_{sg 2}-{γ}_{sl 2}\right) {δA}_{sl 2} \pm {γ}_{slg 1} {δL}_{slg 1} \pm {γ}_{slg 2} {δL}_{slg 2} - Δ PδV = 0$

Equation (18) is a model that can be implemented when both the first substrate 101 and the second substrate 102 are convex, whatever their specific shape (conical, spherical...).

### Energy of a capillary bridge between two concave substrates

In another embodiment of the present invention, the first substrate 101 and the second substrate 102 are both concave. Also, preferably, the first substrate 101 and the second substrate 102 exhibit a symmetry of revolution around the same axis, the x axis in the figures. The first substrate 101 and the second substrate 102 are not necessarily identical nor symmetrical to each other.

This time, the liquid bridge volume is given by: $V = {\int }_{{x}_{{c}_{1}}}^{{x}_{{c}_{2}}} πy {\left(x\right)}^{2} dx + \left({V}_{{s}_{1}}+{V}_{{s}_{2}}\right)$

*V*_{*s*₁} and *V*_{*s*₂} being the parts of upper and lower liquid volumes extending into the solid substrates.

Equations (5) to (18) are still applicable to this embodiment.

### Capillary bridge between two conical substrates

In a particular embodiment of the invention, the first substrate 101 and the second substrate 102 have a conical shape. Preferably, both substrates 101, 102 are identical and especially have the same angular aperture.

Before establishing the equation for the total energy of the system in this particular case, and with reference to Figure 1, it is useful to define some geometric parameters of the capillary bridge 1 of revolution between the first substrate 101 and the second substrate 102:
- the liquid-gas interface is generated by the curve y *= y*(*x*)*.*
- the lower (respectively upper) abscissa at the contact line are opposite and denoted *x_{c}* (respectively -*x_{c}*) and both triple lines have radius *y_{c} = y*(-*x_{c}*).
- the contact angle between the liquid-gas surface at the upper and lower solid substrate is denoted *θ*.
- the angular aperture (also called opening angle) of the substrates 101, 102 is denoted *α*.
- the distance between the apex of the cone and the triple line is denoted *s_{c}*.

We assume that *γ_{sg}, γₛₗ* are constant and only depend from the involved materials (liquid, substrates and atmosphere). We also assume that the substrates are motionless, hence *δx_{A} =* 0.

We seek the positions of the capillary interface that minimize the energy of the system which satisfies for an imposed energy pressure Δ*P = P_{gas} - P_{liquid}* applied to the upper substrate. These are characterized by the following relation: $- Δ PδV + {γ}_{lg} {δA}_{lg} + \left({γ}_{sl}-{γ}_{sg}\right) {δA}_{sl} \pm {γ}_{slg} {δL}_{slg} = 0$

### Energy of a capillary bridge between two identical conical substrates at imposed pressure

The total volume of the liquid capillary bridge 1 between two conical substrates 101 and 102 is given by the following equation: $V = {\int }_{- {x}_{c}}^{{x}_{c}} πy {\left(x\right)}^{2} dx - ω 2 {V}_{c}$ where *V_{c}* is the volume of the wetted lower (respectively upper) portions of cones: ${V}_{c} = \frac{1}{3} {{πy}_{c}}^{2} \left({x}_{c}-{x}_{A}\right)$ And where ω=1 when the conical substrates 101, 102 are convex (as depicted in Figure 1) and
ω =-1 when the conical substrates 101, 102 are concave.

The liquid-gas surface area is given by the following equation: ${A}_{lg} = {\int }_{- {x}_{c}}^{{x}_{c}} 2 πy \left(x\right) \sqrt{1 + y {′}^{2}} dx$ where y' *= dy*/*dx.*

The solid-liquid surface area is given by the following equation: ${A}_{sl} = 2 {{πy}_{c}}^{2} \frac{1}{sin \left(α\right)}$

Finally, the total triple line *L_{slg}* lengths write as: ${L}_{slg} = 4 {πy}_{c}$

The following paragraphs aims at defining the geometrical quantities useful for determining the compact expression of the energy variation and later on the equilibrium equations. The position of the capillary interface is noted *y*(*x*) and its derivative *y'*(*x*)*.* At the contact lines *x = x_{c}* and *x =* -*x_{c}*, we note *y_{c}* = (*x_{c}*) and ${y}_{c}^{′} = y ′ \left({x}_{c}\right)$*.*

It comes from Equation (21) that the variation of volume is given by: $δV = {\int }_{- {x}_{c}}^{{x}_{c}} δ \left({πy}^{2}\right) dx + 2 {{πy}_{c}}^{2} {δx}_{c} - 2 {ωδV}_{c}$

When injecting Equations (22) and (23) into (26), one finds the following expressions for *δA_{lg}*: ${δA}_{lg} = 2 π {\int }_{- {x}_{c}}^{{x}_{c}} \frac{1 + {y}^{′ 2} \left(x\right) - \left(x\right) y ′ ′ \left(x\right)}{{\left(1+{y}^{′ 2}\left(x\right)\right)}^{\frac{3}{2}}} δy \left(x\right) dx + 4 {πy}_{c} \sqrt{1 + {y}_{c}^{′ 2}} {δx}_{c} + 2 π \frac{{y}_{c} {y}_{c} ′}{\sqrt{1 + {y}_{c}^{′ 2}}} δy \left({x}_{c}\right)$

Moreover, the expressions of *δAₛₗ* and *δL_{slg}* result from Equations (24) and (25): ${δA}_{sl} = \frac{4 π}{sin \left(α\right)} {y}_{c} {δy}_{c}$ ${δL}_{slg} = 4 {πδy}_{c}$

Moreover, referring to Figure 1: ${x}_{c} = cos \left(α\right) {s}_{c} + {x}_{A}$ ${y}_{c} = sin \left(α\right) {s}_{c}$

By combining Equations (26)-(28), (30) and (31): $\begin{matrix}2 π Δ P {\int }_{- {x}_{c}}^{{x}_{c}} y \left(x\right) δy \left(x\right) dx - 2 π {γ}_{lg} {\int }_{- {x}_{c}}^{{x}_{c}} \frac{1 + {y}^{′ 2} \left(x\right) - y \left(x\right) y " \left(x\right)}{{\left(1+{y}^{′ 2}\left(x\right)\right)}^{3 / 2}} δy \left(x\right) dx + \\ 4 {πγ}_{lg} \left({y}_{c}\sqrt{1 + {y}_{c}^{′ 2}} cos\left(α\right)+\frac{{y}_{c} {y}_{c ′}}{\sqrt{1 + {y}_{c}^{′ 2}}}\left(sin\left(α\right)-{y}_{c}^{′} cos\left(α\right)\right)-{Sy}_{c}\pm \frac{{γ}_{slg}}{{γ}_{lg}}sin\left(α\right)\right) {δs}_{c} = 0\end{matrix}$ where $S = \frac{{γ}_{sg} - {γ}_{sl}}{{γ}_{lg}}$*.*

### Young Laplace equation

Equation (32) is true for any kinematically admissible variation *δy*(*x*) which sets the solid-liquid-gas interface. Considering *δs_{c} =* 0, , Equation (32) reduces to: $2 π {\int }_{- {x}_{c}}^{{x}_{c}} \left(-ΔPy\left(x\right)+{γ}_{lg}\frac{1 + {y}^{′ 2} \left(x\right) - y \left(x\right) y " \left(x\right)}{{\left(1+{y}^{′ 2}\left(x\right)\right)}^{3 / 2}}\right) δy \left(x\right) dx = 0$

It follows that: $\frac{y " \left(x\right)}{{\left(1+{y}^{′ 2}\left(x\right)\right)}^{3 / 2}} - \frac{1}{y \sqrt{1 + {y}^{′ 2}}} = - \frac{Δ P}{{γ}_{lg}}$

### Generalized Young equation

According to (34), Equation (32) provides: $4 {πγ}_{lg} {y}_{c} \left(\sqrt{1 + {{y}_{c}}^{′ 2}} cos\left(α\right)+\frac{{y}_{c ′}}{\sqrt{1 + {{y}_{c}}^{′ 2}}}\left(sin\left(α\right)-{y}_{c}^{′}cos\left(α\right)\right)-S\pm \frac{{γ}_{slg}}{{γ}_{lg} {γ}_{c}}sin \left(α\right)\right) = 0$

Then, one can exploit the geometrical boundary conditions due to the conic shape of the substrates 101, 102. As can be seen on Figure 1: $α = β + θ$ ${y}_{c} = tan \left(β\right)$

Which provides the limit conditions for *y_{c}'*: ${y}_{c} ′ = tan \left(α-θ\right)$

By injecting (38) into (35), one gets: $\frac{cos \left(α\right)}{cos \left(α-θ\right)} + sin \left(α-θ\right) sin \left(α\right) - \frac{{sin}^{2} \left(α-θ\right)}{cos \left(α-θ\right)} cos \left(α\right) - S \pm \frac{{γ}_{slg}}{{γ}_{lg} {y}_{c}} sin \left(α\right) = 0$

Finally, by using trigonometry formulas, one gets the equilibrium equation for two conical substrates: $cos \left(θ\right) - S \pm \frac{{γ}_{slg}}{{γ}_{lg} {y}_{c}} sin \left(α\right) = 0$ where the last term comes from the line energy.

### Capillary bridge between two spherically curved substrates

In another particular embodiment of the invention, the first substrate 101 and the second substrate 102 have a spherical shape. In other word, in this embodiment, the first substrate 101 and the second substrate 102 are spherically curved. Preferably, both substrates 101, 102 are identical and especially have the same radius of curvature.

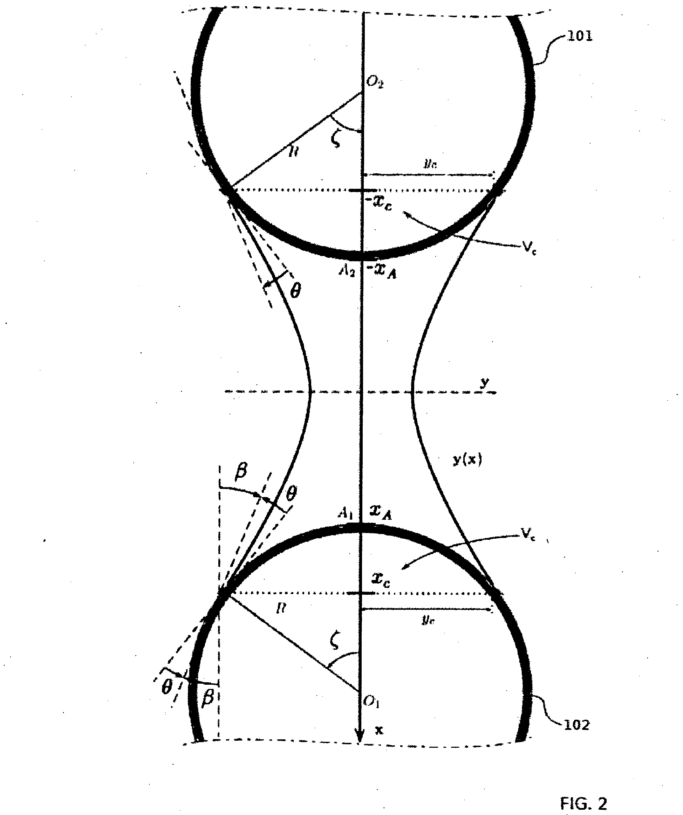

Before establishing the equation for the total energy of the system in this particular case, and with reference to Figure 2, it is useful to define some geometric parameters of the capillary bridge 1 of revolution between the first substrate 101 and the second substrate 102:
- as above, the liquid-gas interface is generated by the curve *y = y*(*x*)*.*
- as above, the lower (respectively upper) abscissa at the contact line are opposite and denoted *x_{c}* (respectively *-x_{c}*) and both triple lines have radius *y_{c} = y*(-*x_{c}*)*.*
- as above, the contact angle between the liquid-gas surface at the upper and lower solid substrate is denoted *θ*.
- *x_{A}* is the abscissa of the highest point of the second spherical substrate 102, and *-x_{A}* the abscissa of the lowest point of the first spherical substrate 101 (in other words, *x_{A}* and *-x_{A}* are the abscissas of the points of each of the substrates 101, 102 that are the closest to each other).
- the radius of curvature of the substrates 101, 102 is denoted *R*.
- the aperture angle of the triple-line with respect to the x-axis is denoted ζ (also called the filling angle of the substrates).

### Energy of a capillary bridge between two identical spherical substrates at imposed pressure

First, Equations (23) and (25) are still true in the case of spherical substrates.

In this case, the total volume of the liquid capillary bridge 1 between two spherical substrates 101 and 102 is given by the following equation: $V = {\int }_{- {x}_{c}}^{{x}_{c}} πy {\left(x\right)}^{2} dx - 2 {ωV}_{c}$ where *V_{c}* is the volume of the wetted lower (respectively upper) portions of spheres: ${V}_{c} = \frac{1}{3} {πR}^{3} \left(2+cos\left(ζ\right)\right) {\left(1-cos\left(ζ\right)\right)}^{2}$ and where ω=1 when the spherical substrates 101, 102 are convex (as depicted in Figure 1)
and ω=-1 when the spherical substrates 101, 102 are concave.
and: ${δV}_{c} = {πR}^{3} {sin}^{3} \left(ζ\right) δζ$

The solid-liquid surface area is given by the following equation: . ${A}_{sl} = 4 {πR}^{2} \left(1-cos\left(ζ\right)\right)$

An equilibrium for the capillary bridge consisting of a liquid phase between two identical spherical solid substrates is in particular a critical point of its total energy, so that: $δE = - δ \left(ΔPV\right) + {γ}_{lg} {δA}_{lg} + \left({γ}_{sl}-{γ}_{sg}\right) {δA}_{sl} \pm {γ}_{slg} {δL}_{slg} = 0$

Moreover, referring to Figure 2: ${x}_{c} = R \left(1-cos\left(ζ\right)\right) + {x}_{A}$ ${y}_{c} = R sin \left(ζ\right)$

By combining Equations (41)-(47), (23) and (25), one gets: $\begin{matrix}δE = - 2 π Δ P {\int }_{- {x}_{c}}^{{x}_{c}} y \left(x\right) δy \left(x\right) dx + 2 {πy}_{lg} {\int }_{- {x}_{c}}^{{x}_{c}} \frac{1 + {y}^{′ 2} \left(x\right) - y \left(x\right) {y}^{"} \left(x\right)}{{\left(1+{y}^{′ 2}\left(x\right)\right)}^{\frac{3}{2}}} δy \left(x\right) dx + \\ 4 π \left(-ΔP\right) {R}^{3} {sin}^{3} \left(ζ\right) δζ + 4 {πγ}_{lg} {y}_{c} \sqrt{1 + {y}_{c}^{′ 2}} Rsin \left(ζ\right) δζ + 4 {πγ}_{lg} \frac{{y}_{c} {{y}_{c}}^{′}}{\sqrt{1 + {y}_{c}^{′ 2}}} R \left(cos\left(ζ\right)-{{y}_{c}}^{′}sin\left(ζ\right)\right) δζ + \\ 4 {πR}^{2} \left({γ}_{sl}-{γ}_{sg}\right) sin \left(ζ\right) cos \left(ζ\right) δζ \pm 4 {πRγ}_{lg} cos \left(ζ\right) δζ = 0\end{matrix}$

### Young Laplace equation

Equation (48) is true for any kinematically admissible variation *δy*(*x*) which sets the solid-liquid-gas interface. Considering *δζ* =0, Eq. (48) reduces to the Young-Laplace equation (34).

### Generalized Young equation

According to (34), Equation (48) reduces to: $\begin{matrix}δE = - 2 π Δ {Py}_{c}^{2} Rsin \left(ζ\right) δζ - 2 \left(-ΔP\right) {πR}^{3} {sin}^{3} \left(ζ\right) δζ + 4 {πγ}_{lg} {y}_{c} \sqrt{1 + {{y}_{c}}^{′ 2}} Rsin \left(ζ\right) δζ + \\ 4 {πγ}_{lg} \frac{{y}_{c} {{y}_{c}}^{′}}{\sqrt{1 + {y}_{c}^{′ 2}}} R \left(cos\left(ζ\right)-{{y}_{c}}^{′}sin\left(ζ\right)\right) δζ + 4 {πR}^{2} \left({γ}_{sl}-{γ}_{sg}\right) sin \left(ζ\right) δζ \pm 4 {πRγ}_{lg} cos \left(ζ\right) δζ = 0\end{matrix}$ and provides: $\sqrt{1 + {y}_{c}^{′ 2}} sin \left(ζ\right) δζ + \frac{{y}_{c ′}}{\sqrt{1 + {y}_{c}^{′ 2}}} \left(cos\left(ζ\right)-{y}_{c}^{′}sin\left(ζ\right)\right) δζ - S \frac{Rsin \left(ζ\right)}{{y}_{c}} δζ \pm \frac{{γ}_{slg}}{{γ}_{lg} {y}_{c}} cos \left(ζ\right) δζ = 0$

As *Rsin*(*ζ*) = *y_{c}*, we get: $\sqrt{1 + {y}_{c}^{′ 2}} sin \left(ζ\right) + \frac{{y}_{c ′}}{\sqrt{1 + {y}_{c}^{′ 2}}} \left(cos\left(ζ\right)-{y}_{c}^{′}sin\left(ζ\right)\right) - S \pm \frac{{γ}_{slg}}{{γ}_{lg} {y}_{c}} cos \left(ζ\right) = 0$

Then, one can exploit the geometrical boundary conditions due to the spherical shape of the substrates 101, 102. As can be seen on Figure 2: $ζ + β + θ = \frac{π}{2}$ ${y}_{c} ′ = tan \left(β\right)$

Which provides the limit conditions for *y_{c}'*: ${y}_{c} ′ = cot \left(ζ+θ\right)$

Finally, by using trigonometry formulas, one gets the equilibrium equation for two spherical substrates: $cos \left(θ\right) - S \pm \frac{{γ}_{slg}}{{γ}_{lg} {y}_{c}} cos \left(ζ\right) = 0$ where the last term comes from the line energy.

### Experimental protocols

An overview of the experimental protocols is firstly given below, then two envisaged alternatives, depending on whether we impose, as a constant either, the volume of the capillary bridge 1 or the difference between capillary and ambient pressures.

### General description of the experimental protocols

The experimental protocols are preferably based on a series of identifications carried out on the basis of the generalized Young's equation obtained in (40) or in (55), depending on the shape of the substrates 101, 102. In both expressions, the last term contains the line energy which is proportional to the triple-line tension *γ_{slg}.* Even if the surface tension between the liquid and the gas *γ_{lg}* can be measured in a fairly traditional way (by the hanging drop test for example), we cannot have direct access to the surface tensions *γₛₗ* and *γ_{sg}*. It can only be accessed indirectly by identification thanks to a model.

However, identification from the classical Young's equation, (where the line energy term is dropped), is only valid in configurations where this last term can actually be neglected, and when the gravity effects are negligible. Moreover, the classical Young's equation does not feature the triple line energy, which therefore cannot be determined with this model.

To minimize the influence of gravity effects, it is preferred to carry out the experiments for small volumes of liquid, typically comprised in between 1 and 10 µl, preferably in between 1 and 5 µl, but in this case relative contribution of line energy can be non-negligible. Not taking the line energy into account distorts the results and interpretation of the measurements.

If, on the contrary, we want to be in configurations where the line energy is negligible, it is appropriate to consider large volumes of drops, typically comprised in between 50 and 150 µl, preferably in between 100 and 150 µl, but in this case the effects of gravity cannot be neglected.

An originality of the present invention is to develop a device 100 and a method 200 (or software or computer program product) based on measurements of capillary bridges between two substrates 101 and 102, one of them being non-planar. In this case, unlike sessile drops, the effects of gravity are relatively much weaker, especially if the distance *D* between the substrates 101 and 102 is small, typically comprised in between 0.5 and 5 mm, preferably in between 0.5 and 3 mm, even for large volumes of liquid, typically comprised in between 50 and 100 µl, preferably in between 50 and 150 µl.

It may be appropriate to firstly consider capillary bridges for very close substrates 101 and 102, typically separated from each other by a distance *D* comprised in between 0.5 and 5 mm, preferably in between 0.5 and 1.5 mm, so as to have a significant spreading of the capillary bridge 1, i.e. for *y_{c}* large. In this case, the last line energy term is negligible and the measurement of the macroscopic wetting angle *θ* (See Fig. 1 and 2) by image processing makes it possible to precisely identify the difference between the surface tensions *γₛₗ - γ_{sg},* the liquid-gas surface tension *γ_{lg}* being known elsewhere, by instance by sessile drops method.

Once the difference between the surface tensions *γₛₗ* - *γ_{sg}* has been determined, as it is an intrinsic property relative to the implemented substrates 101 and 102, we may consider very sparsely spread capillary bridges 1, i.e. with small *y_{c}*, so as to have a contribution from the line energy important which will be next deduced by identification, owing to the knowledge of the difference between the surface tensions *γₛₗ* - *γ*_{sg} as previously identified and to equation (40) or (55).

### Experimental protocols with imposed volume and variable pressure

The evolution of the shape of the capillary bridge 1 may be filmed 230 by a camera (106 and if needed 107) and the images obtained are processed 240 with a computer program product, for instance a Matlab code, implementing an embodiment of the method 200 according to the second aspect of the present invention. Preferably, the device 100 used for this purpose comprises at least a microbalance 103, a telecentric light source 105 and a high-resolution camera 106, for instance one commercialized by Basler^{®}.

For capillary bridges, the lower substrate 102 may be fixed on a support while the upper substrate 101 may be fixed on another support which can move vertically thanks to a micro-positioning system to adjust the spacing D between said two substrates.

The bottom substrate 102 may be fixed on a support, that may be resting on the microbalance 103, while the top substrate 101 may be fixed on another support which can move vertically thanks to a micro-positioning system 104 to adjust the distance *D* between said two substrates 101 and 102.

Before depositing the liquid, for instance water, between the two substrates 101 and 102, all surfaces may preferably be cleaned with ethanol, separated at the desired vertical distance *D* and aligned on the same line between the light source 105 and the high-resolution camera 106.

To adjust camera alignment with the substrates and telecentric light 105, a secondary camera 107 may be placed sensibly unaligned, for instance sensibly perpendicular, to the illumination axis to provide an unaligned view, for instance a sensibly perpendicular view.

Optical settings and light intensity of the telecentric light source 105 and/or at least one of the cameras 106 and 107 may also be adjusted to provide the best resolution of at least images taken by either of the two cameras.

Liquid deposition 210 aims to form the liquid capillary bridge 1 ; it may be done using a micro syringe or any deposition or injection system with calibrated volume delivery.

The evolution of the geometry of the formed bridge 1 over time or when the distance *D* between the substrates 101 and 102 varies is filmed 230 throughout the experiments. The abovementioned computer program product implementing an embodiment of the method 200 according to the second aspect of the present invention makes it possible to process 240 and 245 the images, calculate at least one associated geometric variable (See on fig. 1 and 2: contact angles *θ* and wetting radii *y_{c}*, indicating the corresponding substrate among said two substrates) and draw the corresponding profile to the theoretical solution of the Young Laplace equation (34).

### Experimental protocols with imposed pressure and variable volume

A second series of experiments may consist of depositing 210 a fixed volume of water between the two substrates 101 and 102 and increasing the distance *D* between them (by using the micro-positioning system 104 of the device 100) during each experiment, at selected constant capillary pressure, *P = cte.*

A device for controlling the capillary pressure conformed or similar to that proposed in Gras et al., MS (2013) Study of capillary interaction between two grains: A new experimental device with suction control, Granular Matter, 15(1): 49-56, may be used for allowing experiments to be carried out at an imposed fixed pressure. In order to impose a capillary pressure difference Δ*P* at the liquid-gas interface, simply adjust the height of liquid in a tank 109 of said device for controlling the capillary pressure so that the difference in height between the water level in the tank 109 and that of the bridge corresponds always to the desired difference in pressure Δ*p = ρg*Δ*h* where *h* represents the difference between the water level in the tank 109 and that of the upper surface of the bottom substrate.

As an alternative, the device 100 according to the first aspect of the invention, and more particularly the space surrounding the two substrates may be placed in an hermetic tank into which the gas pressure can be controlled.

The evolution of the capillary bridge 1 may be recorded using the high-resolution camera 106 and the images obtained processed with a central processing unit 108 of the device 100.

### Summary of the experimental protocols

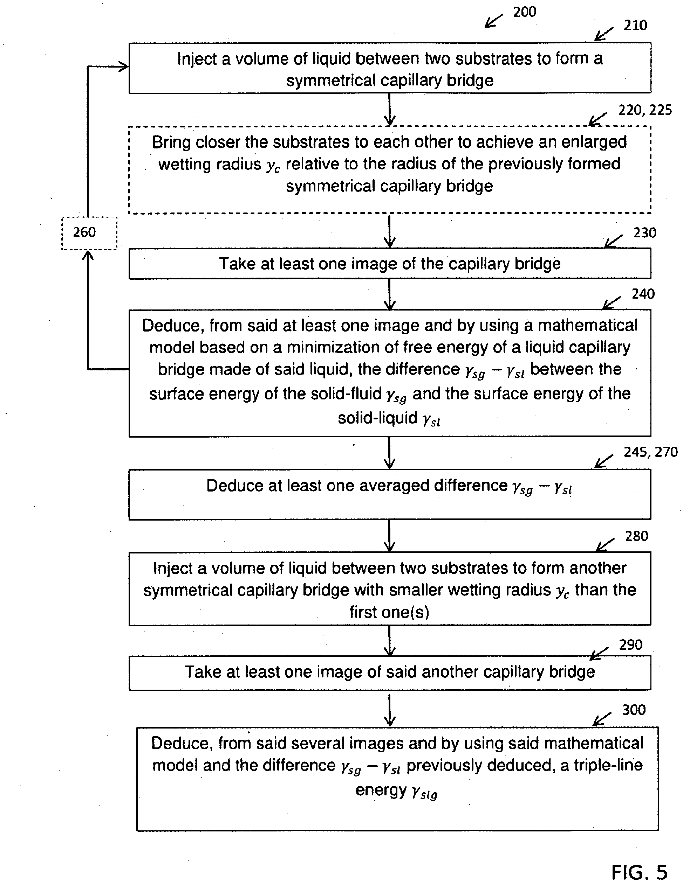

With reference to Figure 5, the experimental protocols can be summarized by the following steps:
- deposit 210 a large volume *V*₀ (See above indicated limits) of liquid between the two substrates 101 and 102 maintained at a small distance *D* (See above indicated limits) from each other to form a symmetrical capillary bridge 1. The volume *V*₀ of the bridge 1 is preferably sufficiently small (See above indicated limits) so that the gravity effects are negligible.
- bring 220 closer the substrates 101 and 102 to each other to reduce the distance *D* and to have a large wetting radius *y_{c}* (See above indicated limits), so that the line energy term is negligible; and
- take 230 images of the formed capillary bridge 1 and deduce the macroscopic wetting angles *θᵢ* by using said central processing unit 108 for implementing the computer program product according to the third aspect of the invention. From the measured value of the macroscopic wetting angles *θᵢ*, where it is supposed that *θ*₁ = *θ*₂, the computer program product identifies 240 the value of the difference between the surface tensions *γₛₗ - γ_{sg}.*

The experimental protocols may further comprise the following step:
- repeat 260 this procedure several times with smaller and/or larger volumes *V*₀ and calculate 270 the average value of the difference between the surface tensions *γₛₗ - γ_{sg}* which will be the result value.

The experimental protocols further comprise the following step:
- once the difference between the surface tensions *γₛₗ - γ_{sg}* is determined 240, repeat 280 and 290 the same experiments with small wetting radius *y_{c}* (See above indicated limits) so as to have a significant contribution from the triple line energy (last term of equations (40) and (55)); and
- measure macroscopic wetting angle *θ*₁ and/or *θ*₂ and identify 300 line energy to be able to identify the triple line energy *γ_{slg}* by considering equation (40) or (55), according to the shape of the substrates 101, 102.

It should be noted that the deduction of the triple line energy can be carried out before the deduction of the value of the difference between the surface tensions *γₛₗ - γ_{sg}.* In other words, steps 280, 290 and 300 can be carried out after or before steps 210, 200, 225, 230, 240, 245, 270.

It is worth noting that the material the substrates are made thereof are not limited; they can be the same or different from the other. Each plate may be made of at least one among glass, steel and Teflon^{®}, by instance. Thus the present invention can be applied to various industrial applications, notably in the field of thin layer(s) deposit(s) of paint(s), surface treatment(s), semiconductor(s), glass(es) (particularly for glazing), glue(s), etc.

The method 100 and its embodiments described herein may be implemented on any form of computer or computers, if needed except for the deposition (or injection) step(s). The components thereof may be implemented as dedicated applications or in client-server architectures, including a web-based architecture, and can include functional programs, codes, and code segments. Any of the computers may comprise a processor, a memory for storing program data and executing it, a permanent storage such as a disk drive, a communication port for handling communications with external devices, and user interface devices, including a display, keyboard, mouse, etc. When some software or algorithms are involved, they may be stored as program instructions or computer readable codes executable on the processor on a computer-readable media such as read-only memory (ROM), random-access memory (RAM), CD-ROMs, magnetic tapes, floppy disks, and optical data storage devices. The computer readable recording medium can also be distributed over network coupled computer systems so that the computer readable code is stored and executed in a distributed fashion. This media can be read by the computer, stored in the memory, and executed by the processor.

For the purposes of promoting an understanding of the principles of various embodiments of the disclosure, reference may have been made to a preferred embodiment illustrated in the drawings, and specific language may have been used to describe this embodiment. However, no limitation of the scope of the disclosure is intended by this specific language, and the disclosure should be construed to encompass all embodiments that would normally occur to one of ordinary skill in the art.

The disclosure may be described in terms of functional block components and various processing steps. Such functional blocks may be realized by any number of hardware and/or software components configured to perform the specified functions. For example, the present disclosure may employ various integrated circuit components, e.g., memory elements, processing elements, logic elements, look-up tables, and the like, which may carry out a variety of functions under the control of one or more microprocessors or other control devices. Similarly, where the elements of the present disclosure are implemented using software programming or software elements the present disclosure may be implemented with any programming or scripting language such as C, C++, Java, Python, Matlab, assembler, or the like, with the various algorithms being implemented with any combination of data structures, objects, processes, routines or other programming elements. Functional aspects may be implemented in algorithms that execute on one or more processors. Furthermore, the present disclosure could employ any number of conventional techniques for electronics configuration, signal processing and/or control, image processing, data processing and the like.

## Claims

1. A device **(100)** for identifying wetting properties of a system comprising a liquid, a fluid and a solid, via a liquid capillary bridge **(1)** made of said liquid, the device comprising:
- a first substrate **(101)** and a second substrate **(102),** at least one among the first substrate **(101)** and the second substrate **(102)** being non-planar,
- a micro-positioning system **(104)** configured to adjust a spacing between the first substrate **(101)** and the second substrate **(102),**
- a telecentric light source **(105)** configured to illuminate the spacing between the first substrate **(101)** and the second substrate **(102),**
- a high-resolution camera **(106)** configured to be sensibly oriented towards said spacing in an opposite direction relative to an optical axis **(1051)** of said telecentric light **(105),** and
- a central processing unit **(108),**
a top substrate **(101)** among the first substrate **(101)** and the second substrate **(102)** being configured together with said micro-positioning system **(104)** for adjusting said spacing, noted *D*, between the first substrate **(101)** and the second substrate **(102),**
the high-resolution camera **(105)** being configured for providing, to the central processing unit **(108),** at least one image of the liquid capillary bridge formed between the first substrate **(101)** and the second substrate **(102),** and
the processing unit **(108)** being configured to identify, in function of said at least one image and according to a model derived from a minimization of total interfacial free energy of said system, with at least one fixed geometrical parameter (α, R) relating to the geometry of at least one among the first substrate **(101)** and the second substrate **(102)** and with a fixed parameter chosen from among a volume *V* and a capillary pressure Δ***P*** of the liquid capillary bridge, at least the difference *γ_{sg}* - *γₛₗ* between the interfacial free energy of the solid-fluid and the interfacial free energy of the solid-liquid from among said wetting properties of the system, with said fluid surrounding the liquid capillary bridge, and to identify the triple line energy *γ_{slg}*.

2. The device according to the preceding claim wherein the first substrate **(101)** and the second substrate **(102)** are axisymmetric about a same axis.

3. The device according to the preceding claim wherein the first substrate **(101)** and the second substrate **(102)** are both convex or both concave and wherein said derived model is given by the following equation:${γ}_{lg} {δA}_{lg} + \left({γ}_{sg 1}-{γ}_{sl 1}\right) {δA}_{sl 1} + \left({γ}_{sg 2}-{γ}_{sl 2}\right) {δA}_{sl 2} \pm {γ}_{slg 1} {δL}_{slg 1} \pm {γ}_{slg 2} {δL}_{slg 2} - ΔPδV = 0$ where *γ_{lg}* is the interfacial free energy of the liquid-fluid interface, *γ*_{*sg*1} is the interfacial free energy of the solid-fluid interface at the first substrate **(101),** *γ*_{*sg*2} is the interfacial free energy of the solid-fluid interface at the second substrate **(102),** *γ*_{*sl*1} is the interfacial free energy of the solid-liquid interface at the first substrate **(101),** *γ*_{*sl*2} is the interfacial free energy of the solid-liquid interface at the second substrate **(102),** *γ*_{*slg*1} is the triple line energy at the first substrate **(101),** *γ*_{*slg*2} is the triple line energy at the second substrate **(102),** *A_{lg}* is the area of the interface between the capillary bridge and the surrounding fluid, *A*_{*sl*1} is the area of the interface between the capillary bridge and the first substrate **(101),** *A*_{*sl*2} is the area of the interface between the capillary bridge and the second substrate **(102),** *L*_{*slg*1} is the length of contact triple-line at the first substrate **(101),** *L*_{*slg*2} is the length of contact triple-line at the second substrate **(102),-and** *u* is their resulting relative displacement.

4. The device according to the preceding claim wherein the first substrate **(101)** and the second substrate **(102)** are spherically curved.

5. The device according to the preceding claim wherein the first substrate **(101)** and the second substrate **(102)** respectively have a first radius of curvature R₁ and a second radius of curvature R₂, R₁ and R₂ being equal, and wherein said derived model is given by the following equation: $cos \left(θ\right) - \frac{{γ}_{sg} - {γ}_{sl}}{{γ}_{lg}} \pm \frac{{γ}_{slg}}{{γ}_{lg} {y}_{c}} cos \left(ζ\right) = 0$ where *γ_{sg}* is the surface energy of the solid-fluid interface, *γₛₗ* is the interfacial free energy of the solid-liquid interface, *γ_{lg}* is the interfacial free energy of the liquid-fluid interface, *γ_{slg}* is the triple line energy, where *θ* is a macroscopic wetting angle of the capillary bridge at the first substrate **(101)** and at the second substrate **(102),** where *ζ* is an angle locating the triple-line, and where *y_{c}* is a wetting radius of the liquid capillary bridge as measured at the level of the first substrate **(101)** and/or at the level of the second substrate **(102)** and relative to a generatrix of the liquid capillary bridge.

6. The device according to any one of claims 1 to 3 wherein the first substrate **(101)** and the second substrate **(102)** have a conical shape.

7. The device according to the preceding claim wherein the first substrate **(101)** and the second substrate **(102)** respectively have a first aperture angle α₁ and a second aperture angle α₂, α₁ and α₂ being equal to α, and wherein said derived model is given by the following equation: $cos \left(θ\right) - \frac{{γ}_{sg} - {γ}_{sl}}{{γ}_{lg}} \pm \frac{{γ}_{slg}}{{γ}_{lg} {y}_{c}} sin \left(α\right) = 0$ where *γ_{sg}* is the interfacial free energy of the solid-fluid interface, *γₛₗ* is the interfacial free energy of the solid-liquid interface, *γ_{lg}* is the interfacial free energy of the liquid-fluid interface, *γ_{slg}* is the triple line energy, where *θ* is a macroscopic wetting angle of the capillary bridge at the first substrate **(101)** and at the second substrate **(102),** and where *y_{c}* is a wetting radius of the liquid capillary bridge as measured at the level of the first substrate **(101)** and/or at the level of the second substrate **(102)** and relative to a generatrix of the liquid capillary bridge.

8. The device according to any one of the preceding claims wherein the distance D between the first substrate **(101)** and the second substrate **(102)** is inferior, preferably at least five times inferior, to $4 \frac{{{l}_{c}}^{2}}{r}$, where ${l}_{c} = \sqrt{\frac{{γ}_{lg}}{Δ ρg}}$*, γ_{lg}* being the interfacial free energy of the liquid-fluid interface, Δ*ρ* being the difference of densities between the liquid forming the capillary bridge and the surrounding fluid, g being the acceleration due to gravity, and where *r* is an approximate radius of a cylinder formed by the capillary bridge between the first substrate **(101)** and the second substrate **(102).**

9. The device according to any one of the preceding claims wherein the first substrate **(101)** and the second substrate **(102)** are each made of one among a metal, a polymer or glass.

10. A method **(200)** for identifying wetting properties of a system comprising a liquid, a fluid and a solid via a liquid capillary bridge **(1)** made of said liquid, the method using a device **(100)** according to any of the preceding claims and comprising the following steps:
a. deposit **(210)** a volume *V*₀ of liquid between the first substrate **(101)** and the second substrate **(102)** of said device **(100)** maintained at a distance *D* from each other to form a symmetrical capillary bridge;
b. take **(230)** at least one image of the capillary bridge; and
c. deduce **(240),** from said at least one image and by using a model derived from a minimization of free energy of a liquid capillary bridge made of said liquid, with at least one fixed geometrical parameter (α, R) relating to the geometry of at least one among the first substrate **(101)** and the second substrate **(102)** and with a fixed parameter chosen from among a volume *V*₀ and a capillary pressure Δ***P*** of the liquid capillary bridge, at least the difference *γ*_{sg} - *γₛₗ* between the interfacial free energy of the solid-fluid *γ_{sg}* and the interfacial free energy of the solid-liquid *γₛₗ* from among said wetting properties of the liquid, with said fluid surrounding the liquid capillary bridge, and deduce the triple line energy *γ_{slg}.*

11. The method according to the preceding claim, wherein, the step of deducing **(240)** said difference *γ_{sg} - γₛₗ* between the interfacial free energy of the solid-fluid *γ_{sg}* and the interfacial free energy of the solid-liquid *γₛₗ* and deducing the triple line energy *γ_{slg}* comprises the measurement of the value of at least one of the macroscopic wetting angles *θ*₁ and *θ*₂ at the first substrate **(101)** and at the second substrate **(102),** where *θ*₁ may be supposed to be 'sensibly equal to *θ*₂, in function of which said difference *γ_{sg}* - *γₛₗ* and said triple line energy *γ_{slg}* are deduced using said derived model, with the surface tension between the liquid and the surrounding fluid *γ_{lg}* being known.

12. The method according to any of the two preceding claims, further comprising at least one of the following steps, after the deposition step (210):
- bring **(220)** closer the substrates **(101, 102)** to each other to reduce the distance *D* and to achieve an enlarged wetting radius *y_{c}* relative to the radius of the previously formed symmetrical capillary bridge; and
- let **(225)** the capillary bridge dry between the two substrates placed at a fixed distance *D*, typically comprised in between 0.5 and 5 mm, preferably in between 0.5 and 3 mm, the step **(230)** being repeated during at least one among the reduction of the distance *D* and the drying of the liquid capillary bridge **(1)** for deducing **(245)** at least one averaged difference *γ_{sg}* - *γₛₗ* between the interfacial free energy of the solid-fluid *γ_{sg}* and the interfacial free energy of the solid-liquid *γₛₗ.*

13. The method according to any of the three preceding claims, further comprising the following step, after the deposition step **(210):**
- move the substrates **(101, 102)** away from each other to increase the distance *D* and to achieve a reduced wetting radius *y_{c}* relative to the radius of the previously formed symmetrical capillary bridge,
the step **(230)** being repeated during the increase of the distance *D* for deducing **(245)** at least one averaged triple line energy *γ_{slg}.*

14. The method according to any of the four preceding claims, further comprising the following steps:
- repeat **(260)** at least steps **(210), (230)** and **(240)** of the method according to claim 10 with various value of the at least one fixed geometrical parameter (α, R) relating to the geometry of at least one among the first substrate **(101)** and the second substrate **(102).**

15. A computer program product comprising instructions which, when implemented by at least one digital processing device, performs at least one among the steps of the method **(200)** according to any of claims 10 to 14.

16. A use of the device according to any claims 1 to 9 for implementing the method **(200)** according to any of claims 10 to 14.
